# EUROPEAN PATENT SPECIFICATION

(11) **EP 3 665 082 B1**
(45) Date of publication and mention of the grant of the patent: **26.05.2021**
(21) Application number: 18765756.4
(22) Date of filing: 07.08.2018
(51) Int. Cl.: B64G 1/10, B64G 1/42, H01R 13/02

(54) **SATELLITE STRUCTURES MADE WITH A STRUCTURED SET**
SATELLITENSTRUKTUREN HERGESTELLT MIT EINEM STRUKTURIERTEN SATZ
STRUCTURES SATELLITES FABRIQUÉES AVEC UN ENSEMBLE STRUCTURÉ

(30) Priority: 07.08.2017 IT 201700091364
(43) Date of publication of application: 17.06.2020
(73) Proprietor: PICOSATS S.R.L., 34149 Trieste (IT)
(72) Inventor: GREGORIO, Anna, 34135 Trieste (IT); CUTTIN, Alessandro, 34151 Trieste (IT); FRAGIACOMO, Mario, 34151 Trieste (IT)
(74) Representative: Petraz, Gilberto Luigi
(86) International application number: PCT/IT2018/050148
(87) International publication number: WO 2019/030787

(56) References cited:
- WO-A1-01/80375
- WO-A1-2004/016055
- CN-A- 102 514 730
- CN-A- 103 963 998
- US-A1- 2014 259 995
- US-A1- 2015 210 408

## Description

### FIELD OF THE INVENTION

The present invention concerns a modular satellite structure comprising a structured set comprising structural elements for the construction of satellite structures.

The present invention also concerns satellite structures thus obtained that can be used in technological fields typical of space applications, such as for example the telecommunications field and/or for the acquisition of data and/or images.

The present invention also concerns the method to make said structural elements and the method to make said satellite structures.

### BACKGROUND OF THE INVENTION

Satellites of limited size and with a mass up to about 50kg are known, also known in the specific field as "smallsats", or "cubesats", which are normally used to acquire and/or transmit data in orbit.

These satellites normally consist of a carrier satellite structure and a plurality of sensors and/or electric devices connected to each other by an electric circuit.

It is known that in order to make these satellites it is necessary that at least the carrier satellite structure and the electric circuit are defined and made on the ground and then associated with the sensors and/or electric devices before the satellite is sent into orbit.

This entails considerable limitations to satellite applications, since it is not possible to create a complete satellite and/or modify the structure directly in orbit and in relation to the specific needs that can be required on each occasion.

Some known solutions provide to make the metal satellite structure and to connect the electric circuit to the latter.

However, in addition to having a high mass and significant costs, these known solutions are strongly affected by the electromagnetic fields and/or temperature variations present in orbit.

There are solutions that provide to create the satellite structure of plastic material and to connect the electric circuit to it.

These known solutions allow to reduce the overall mass, but not to overcome the interfering action of the electromagnetic fields and/or of the temperature variations on the electric circuit.

An electric circuit support element is known from WO-A-01/80375, comprising a first electrically insulating tubular element having a longitudinal axis and an internal surface area and an external surface which supports one or more electric connectors, and a second tubular element having a longitudinal axis and an external surface area. The first and second elements extend coaxially to each other, disposed at least partly one in the other, radially distanced from each other to define a cavity, which is at least partly filled with a compact filling material. The solution described in WO-A-01/80375 is complex to produce, providing two tubular elements disposed coaxially, not very versatile, and does not allow to construct structures having the desired shape. In particular, this known solution does not provide the possibility of making modular box-shaped structures, suitable for making small satellites.

Document CN-A-103 963 998 describes a carrier frame for a satellite structure having a hexagonal section shape, comprising two hexagonal frames fixed at opposite ends of longitudinal profiled bars, and adjustable transverse bars attached to the profiled bars by means of mounting holes provided on the latter. This solution only provides to construct a single carrier structure, and does not provide the possibility of creating composite structures by coupling a plurality of support frames together, or defining through holes in which it is possible to insert the electric circuits, so as to facilitate the wiring of the structure and connection to any electric devices.

Document US-A-2014/0259995 describes a modular structure of a low-weight composite material, which can be transported by means of a rocket or an aerospace missile, and can be assembled on the surface of a planet, or a satellite, by two robots. US-A-2014/0259995 concerns a structure of considerable size, suitable to act as a residential module for one or more individuals, and is therefore not suitable for making small satellites. Moreover, the solution in US-A-2014/0259995 does not provide to make cavities inside the modular panels, which can be put in communication with each other to provide a cavity passing through the structure, suitable to house electric conductors, so as to facilitate the assembly and wiring of the final structure.

Document CN-A-105947235 describes an electric energy and mechanical environment management multifunctional structure. The structure comprises a main structure module, four chargeable/dischargeable power source modules, a vibration damping system and a sensor module. The main structure module comprises a frame, an upper cover plate and a lower cover plate. A space between the periphery of each power source module and walls of a squared cavity is used for accommodating the power source modules. The structure adopts multiple light materials such as a carbon fiber composite and a hollow frame structure.

There is therefore a need to perfect and make available a structured set to make satellite structures, and satellite structures made with said structured set, which overcome at least one of the disadvantages of the state of the art.

There is also the need to perfect and make available a method to make said structured set, as well as a method to make said satellite structures, which overcome at least one of the disadvantages of the state of the art.

The purpose of the present invention is to provide a structured set for making satellite structures that allows the satellite structure and the electric circuit to be constructed, even in orbit and in relation to the specific needs that can be required on each occasion.

Another purpose is to provide a satellite structure that can guarantee an effective shielding of the electric circuit in relation to the electromagnetic fields and/or the temperature variations present in orbit, which is simple to make.

Another purpose of the present invention is to perfect a method to make satellite structures using the components of a structured set easily and quickly, and which allows to adapt on each occasion the size and shape of the satellite structure according to specific needs.

Another purpose of the present invention is to provide a method to make a structured set that requires simple and rapid construction steps.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of first and second structural elements forming part of a structured set according to one of the embodiments described here;
- figs. 2-5 are perspective views of possible embodiments of first and second structural elements;
- fig. 6 is a perspective view of a modular satellite structure made with a structured set according to a possible embodiment of the present invention;
- fig. 7 is a detail of fig. 6;
- fig. 8 is a detail of a possible variant of fig. 6;
- figs. 9-12 are views of possible embodiments of structural elements connected to each other;
- figs. 13-15 are three perspective views of variants of modular satellite structures according to possible embodiments described;
- fig. 16 is a partly exploded view of a detail of fig. 14.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

Embodiments described here concern a structured set 10 able to provide one or more modular satellite structures 20 which can be used, for example, in the telecommunications field and/or for the acquisition of data and/or images.

In particular, the present invention concerns satellite structures 20 which have limited sizes and masses, for example less than about 50Kg.

These satellite structures 20 are referred to in the specific field also as "smallsats", or "cubesats".

One of the advantages obtainable with the present invention is that it is possible to obtain already wired modular satellite structures 20, that is to say with an electric circuit 23 integrated in the body of the satellite structure 20 both on the ground and in orbit.

The modular satellite structures 20 according to the present invention can be adapted and/or modified in the structure in relation to the specific requirements that can be required on each occasion in orbit.

The structured set 10 comprises a plurality of structural elements 11 of various shapes and sizes.

The structural elements 11 are provided with connection means 12 able to connect two or more structural elements 11 to each other to form a modular satellite structure 10.

The connection means 12 are able to connect two or more structural elements 11 in a stable manner for the function which they perform.

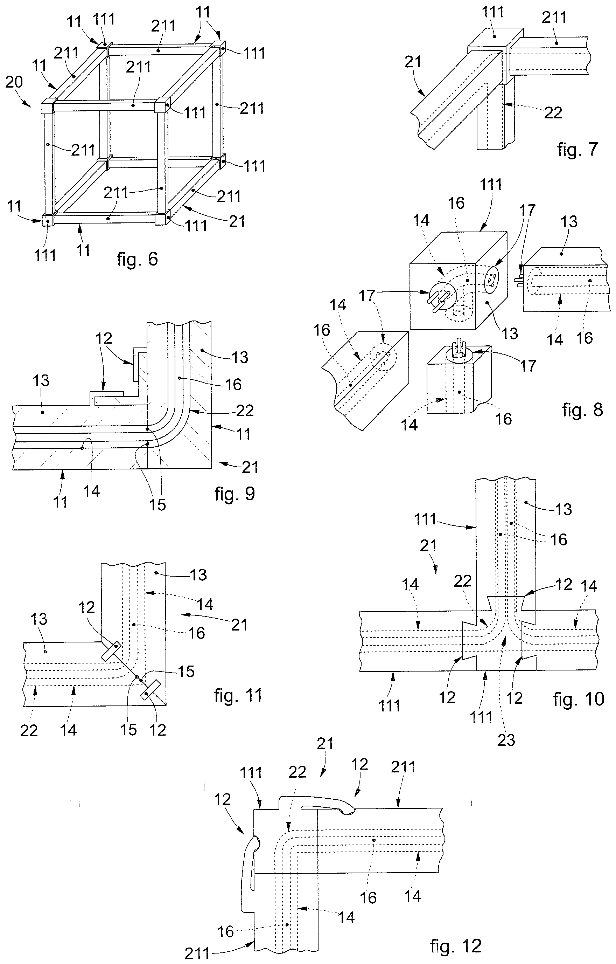

According to possible embodiments, some of which are shown by way of example in figs. 9 to 12, the connection means 12 can comprise mechanical slot-in means, anchoring elements, hooks, fasteners, locking mechanisms, or other connection means 12.

According to one aspect of the present invention, each of the structural elements 11 comprises a containing body 13 made of plastic material provided with at least one cavity 14 defined between at least two apertures 15 of the containing body 13 itself.

The containing bodies 13 can have various shapes, such as for example a cube, a parallelepiped, a tetrahedron, a sphere, or other geometric shapes.

According to possible embodiments, at least one of the containing bodies 13 can have a plurality of apertures 15 connected to one another with one or more cavities 14 provided in the containing body 13 itself.

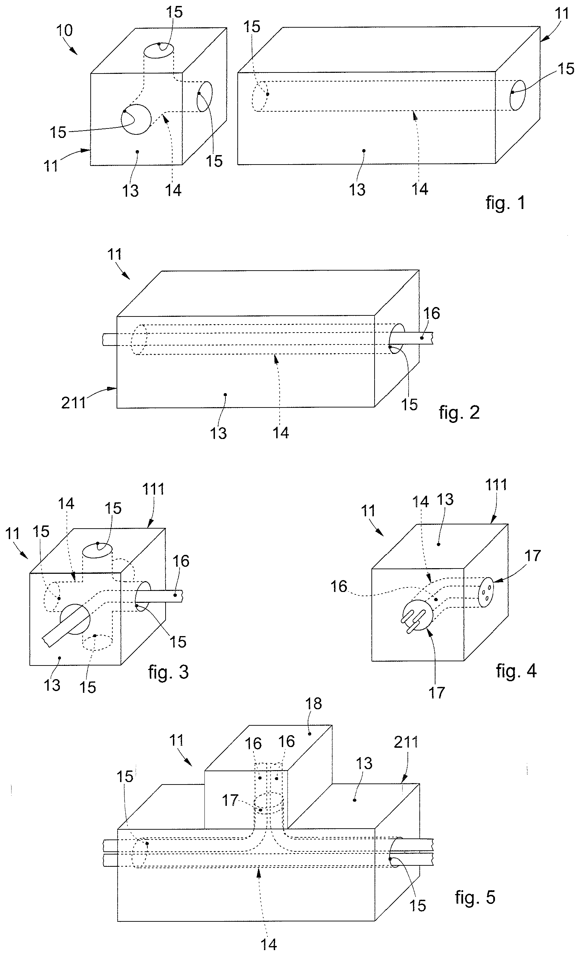

With reference to fig. 1, a structured set 10 is shown comprising two structural elements 11, one having a containing body 13 in the shape of a cube, also known as a joint 111 or a corner joint, and the other in the form of a parallelepiped, also called bar 211 or connection bar.

It is clear that a structured set 10 can comprise a plurality of structural elements 11, whether they are joints 111 and/or bars 211, or also other structural elements 11 of different shapes.

According to preferential embodiments, the structured set 10 can comprise at least: a joint 111 defined by a containing body 13 having at least two apertures 15 oriented in two distinct directions, and a bar 211 defined by another containing body 13 having at least two apertures 15 oriented in two opposite directions.

According to some embodiments, the containing body 13 of the structural element with a joint 111 comprises at least two apertures 15 oriented in directions orthogonal to each other.

According to variant embodiments, the containing body 13 of the structural element with a joint 111 comprises at least three apertures 15 oriented in directions orthogonal to each other.

In the example in fig. 1, the joint 111 has a cavity 14 connecting three apertures 15 located on three adjacent faces of the cubic containing body 13, while the bar 211 has a cavity 14 connecting two apertures 15 located on two parallel faces of the parallelepiped.

According to some embodiments, the containing body 13 of the structural element with a bar 211 comprises at least two apertures 15 coaxial with each other.

According to variant embodiments, the containing body 13 of the structural element with a bar 211 comprises at least two apertures 15 oriented in directions orthogonal to each other.

According to possible embodiments, the bar 211 can comprise one or more apertures 15 located on at least one longitudinal face of the containing body 13 in the shape of a parallelepiped.

According to some embodiments, the apertures 15 can be provided on each side of a structural element 11.

According to some embodiments, the cavity 14 of the containing body 13 can connect all the apertures 15 of the containing body 13 with each other.

According to possible embodiments, the bar 211, or in any case a structural element 11, can have one or more inclined faces.

For example, a face can be inclined by an angle of inclination comprised between 20° and 70°.

The inclined faces of two structural elements 11 can also be connected to each other by suitable connection means 12 to optimize the overall sizes if it is intended to make a curved or angled portion of the satellite structure 20.

According to possible solutions, one or more apertures 15 can be provided on the edges of the containing body 13.

According to some embodiments, the connection means 12 can be provided in correspondence with the respective apertures 15 of the containing bodies 13 and are configured to connect two structural elements 11 to each other so as to fit with the apertures 15 of one and the other structural element 11 and put the respective cavities 14 in communication.

According to possible embodiments, at least one conductor element 16 is present in the cavity 14 of one or more of the containing bodies 13.

According to possible embodiments, at least one electric component is present in the cavity 14 of one or more of the containing bodies 13, such as for example a sensor, a processing unit, a microprocessor, an electric power supply, etc.

According to possible solutions, the conductor element 16 can be an electric cable, a filiform element, a coaxial cable, or another similar element able to conduct electric current when powered.

The conductor element 16 can be coated with an insulating material.

In accordance with possible embodiments, the internal wall of the cavities can be coated with a layer of conductive coating.

The coating layer can be used to further shield the conductor elements 16 from the electromagnetic fields or to function as a conductor element 16 itself.

According to possible embodiments, the conductor element 16 can be flexible.

According to possible embodiments, the conductor element 16 connects two or more apertures 15 of the cavity 14 of a containing body 13 to each other.

The conductor element 16 can be attached inside the cavity 14 of the containing body 13, for example by means of attachment elements such as hooks, clamps, or other.

According to possible embodiments, in the cavity 14 there can be two or more conductor elements 16 each connecting two or more apertures 15.

According to possible solutions, the structural elements 11 are provided with at least one electric connector 17 connected to one or more conductor elements 16.

Each of the electric connectors 17 is able to electrically connect to at least one other of the electric connectors 17, or to an electric device 18.

According to possible solutions, the electric connector 17 can also provide a mechanical connection and therefore also function as a connection mean 12 between two structural elements 11.

For example, two electric connectors 17 associated with respective conductor elements 16 of two structural elements 11 can be connected to each other by mechanical interference such as a plug-socket set, or provide a bayonet mechanism, or other.

According to possible embodiments, the electric devices 18 can comprise an electric power supply, a sensor, a data processing unit, a management unit, a data transmission unit, a data receiving unit, combinations thereof, or other electric device.

Since the individual structural elements 11 are defined by a containing body 13 made of plastic material in which the conductor elements 16 are located, the latter are not affected by electromagnetic fields and/or variations in temperature.

According to possible embodiments, the containing body 13 consists of one or more thermoplastic materials selected from a group consisting of: polyether-ether-ketone (PEEK), polyether-ether-ketone reinforced with carbon fibers (CFR-PEEK), liquid crystal polymers (LCP), PolyOxyMethylene (POM) and combinations thereof.

According to possible embodiments, at least one metal and/or carbon insert can be present inside the plastic material constituting the containing body. For example, the insert can comprise aluminum.

The insertion of possible inserts made of materials such as for example aluminum and/or carbon, allows to further increase the mechanical resistance of the satellite structures 20 leaving the characteristics of the plastic material considered unchanged, such as for example shielding against electromagnetic radiations.

These materials have a plurality of advantages, which in the specific field of satellite structures are even more advantageous.

These materials allow to make lightweight structural elements 11 which at the same time effectively shield the conductor elements 16 contained therein from external electromagnetic fields and/or the typical temperature variations that occur in orbit.

The structural elements 11 made with such materials also have high mechanical resistance to compression and stretching even in different directions of application of the stress.

Even if such materials have high melting temperatures able to preserve the shape of the containing bodies 13 in orbit, they nevertheless have a melting temperature lower than the temperature to which they are subjected upon re-entry into the atmosphere, that is, a melting temperature of about 600°C.

The structural elements 11 made with the above materials are configured to completely disintegrate during re-entry into the atmosphere.

This prevents putting debris into space, which remains there for long periods.

These materials also have the advantage that they can be used to make the structural elements 11 by means of 3D additive techniques, sintering, extrusion, or molding.

Once the final shape of the individual structural element 11 has been defined, for example according to a predefined pattern memorized in a memory unit, or with a mold, it is possible to produce a plurality of structural elements 11 in series at limited costs.

Formulations of the present invention also concern a modular satellite structure 20 made with a structured set 10 comprising a plurality of structural elements 11 connected to one another.

According to one aspect of the present invention, the satellite structure 20 comprises at least one base body 21 provided with one or more connection cavities 22.

The base body 21 consists of the set of containing bodies 13 of the structural elements 11 connected to each other and the connection cavities 22 consist of the set of two or more cavities 14 of the structural elements 11.

According to some embodiments, the connection cavities 22 can pass through two or more structural elements 11.

According to some embodiments, a connection cavity 22 can be provided which connects all the structural elements 11 of the satellite structure 20.

The cavities 14 of the individual structural elements 11 make up one or more connection cavities 22 in the base body 21 in which conductor elements 16 or other elements can be inserted.

Formulations of the present invention also concern a method to make a modular satellite structure 20 which provides to make available a plurality of structural elements 11, to assemble the structural elements 11 together, forming a base body 21 in which one or more connection cavities 22 are present by coupling at least two apertures 15 of two separate containing bodies 13, so as to put the respective cavities 14 in reciprocal communication.

According to possible embodiments, at least in one of the connection cavities 22 there is an electric circuit 23 consisting of a plurality of conductor elements 16 provided in the cavities 14. According to some embodiments, the method provides to dispose a conductor element 16 in one or more cavities 14 of respective structural elements 11 before the structural elements 11 are assembled.

According to variant embodiments, the method provides to insert a conductor element 16 into one or more cavities 14 or connection cavities 22 of respective structural elements 11 after they have been assembled.

This guarantees that the electric circuit 23 is shielded against electromagnetic fields and/or changes in temperature when in orbit.

In accordance with possible embodiments, the electric circuit can be connected to at least one electric device 18 by means of an electric connector 17.

The electric device 18 can be attached to the satellite structure 20, for example with clamps, glues, or other known attachment means.

According to possible embodiments, the modular satellite structure 20 comprises a base body 21 having a cubic shape.

With reference to fig. 6, the base body 21 with a cubic shape can be made by connecting eight joints 111 and twelve bars 211 to each other.

According to the embodiment shown by way of example, the edges of the cubic base body 21 comprise a joint 111 and three bars 211 connected to each other, having their respective cavities 14 connected together to form a single connection cavity 22.

According to possible embodiments, a conductor element 16 can be present in the cavities 14 of the individual structural elements 11 which constitute one edge of the satellite structure 20.

The conductor elements 16 can be connected to each other by suitable electric connectors 17 to make an electric circuit 23.

According to possible embodiments, the joints 111 of the edges can have other apertures 15 on the other faces of the containing body 13 to also connect other bars 211.

According to possible solutions, the base bodies 21 can also be associated with existing satellite structures and constitute an extension of the satellite structure itself.

By associated we mean that the base bodies 21 are connected to each other and constitute a single body with the satellite structure 20, whether it is made solely with the base bodies 21 or completed with one or more base bodies 21.

According to possible embodiments, the achievable modular satellite structures 20 can comprise a plurality of base bodies 21 having a cubic shape connected to each other.

For example, satellite structures 20 can be made having six base bodies 21 of cubic shape, creating a 3x2x1 structure, that is, putting on an orthogonal system of spatial coordinates X-Y-Z a structure having three base bodies 21 in direction X, two base bodies 21 in direction Y and one in direction Z.

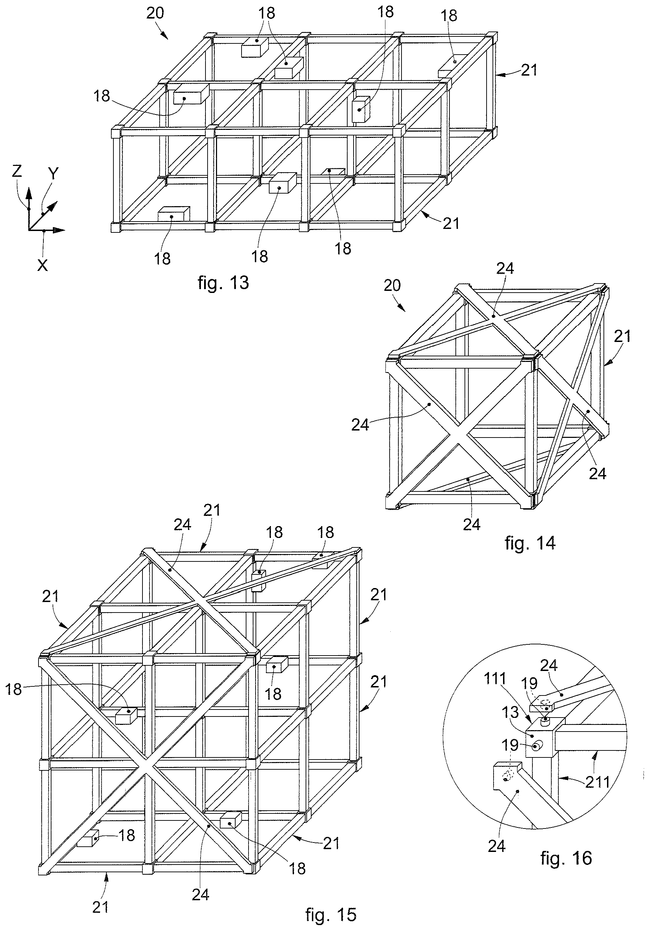

With reference to fig. 15, a modular satellite structure 20 with eight cubic-shaped base bodies 21 is shown, connected to make a 2x2x2 structure. According to possible embodiments, the modular satellite structures 20 can have a plurality of base bodies 21 of a cubic shape.

This allows, for example, to obtain satellite structures 20 with a 2x1x1, 3x3x3, 3x3x1 structure or other combinations having a desired number of base bodies 21 in directions X, Y, and Z.

The satellite structures 20 can be assembled directly in orbit. This allows a structured set 10 to be transported and to create the satellite structure 20 in orbit according to the specific needs.

With reference to fig. 14, according to possible embodiments, the satellite structure 20 comprises one or more strengthening elements 24 connecting two or more structural elements 11 of one or more of said base bodies 21.

According to possible embodiments, the individual structural elements 11 and the ends of the strengthening elements 24 are attached to each other by suitable attachment means 19.

For example, the attachment means can provide to couple a pin inserted by mechanical interference into a respective seating, said pin and said seating being provided one on the end of the strengthening element 24 and one on the surface of the containing body 13 of the structural element 11.

In addition to making the entire satellite structure 20 more stable, the strengthening elements 24 can be used as a support to attach the electronic devices 18, or other elements.

It is clear that modifications and/or additions of parts can be made to the structured set 10 and the satellite structure 20, as well as the methods to make the structural elements 11 of the structural set 10 and to make the satellite structure 20 as described heretofore, without departing from the field and scope of the present invention.

It is also clear that, although the present invention has been described with reference to some specific examples, a person of skill in the art shall certainly be able to achieve many other forms of structured set 10 and satellite structure 20, having the characteristics as set forth in the claims and hence all coming within the field of protection defined thereby.

## Claims

1. Modular satellite structure (20), flat or three-dimensional, comprising a structured set to make the modular satellite structure, wherein the structured set comprises a plurality of structural elements (11), wherein the structural elements (11) are bars (211) and joints (111), respectively, in which each structural element (11) comprises a containing body (13) made of plastic material provided with at least one cavity (14) defined between at least two apertures (15) of said containing body (13), and connection means (12) to connect with respect to each other two or more of said structural elements (11) to form at least a base body (21) with a flat or three-dimensional polygonal structure, so that, in an assembled and connected state, one aperture (15) of one structural element (11) fits with one aperture (15) of another structural element (11) and the respective cavities (14) are in communication with each other and together form one or more connection cavities (22) in said base body (21), wherein each joint (111) connects two or more bars (211), **characterised in that** at least one conductor element (16) able to conduct electric current when powered is disposed in said cavities (14).

2. Satellite structure as in claim 1, **characterized in that** at least one electric component is disposed in said cavities (14) of one ore more structural elements (11), wherein said electric component comprises one or more of either a sensor, a processing unit, a microprocessor or an electric power supply.

3. Satellite structure as in claim 2, **characterized in that** at least one electric connector (17) is connected to said at least one conductor element (16), and configured to electrically connect to at least one conductor element (16) of another structural element (11), or to an electric device (18).

4. Satellite structure as in any of the claims from 2 to 3, **characterized in that** the respective containing body (13) of the joint (111) and of the bar (211) has at least two of said apertures (15) oriented in two separate directions.

5. Satellite structure as in any of the claims from 1 to 3, **characterized in that** said containing body (13) of the bar (211) comprises at least two apertures (15) coaxial with each other.

6. Satellite structure as in any of the claims from 1 to 4, **characterized in that** said containing body (13) of the a bar (211) comprises at least two apertures (15) oriented in directions orthogonal with respect to each other.

7. Satellite structure as in any claim hereinbefore, **characterized in that** said containing body (13) consists of one or more thermoplastic materials chosen from a group consisting of: polyether-ether-ketone (PEEK), carbon fiber-reinforced polyether-ether-ketone (CFR-PEEK), liquid crystal polymers (LCP), PolyOxyMethylene (POM) and combinations thereof.

8. Satellite structure as in claim 3, **characterized in that** in at least one of said connection cavities (22) there is an electric circuit (23) consisting of a plurality of the conductor elements (16) provided in said cavities (14) and connected to each other by means of electric connectors (17) provided in correspondence with the respective apertures (15) of said structural elements (11).

9. Satellite structure as in any claim hereinbefore, **characterized in that** it comprises a plurality of base bodies (21) with a flat or three-dimensional shape, associated with each other and having an identical polygonal shape, or at least an identical reciprocal connection face.

10. Method to make a modular satellite structure (20) as in any claim hereinbefore, wherein the method provides to make available the structured set comprising a plurality of said structural elements (11), to assemble said structural elements as joint (111) and bar (211) with respect to each other, connecting each joint (211) with two or more bars (211) forming at least a base body (21) with a flat or three-dimensional polygonal structure, making one aperture (15) of the containing body (13) of one structural element (11) fit with one aperture (15) of the containing body (13) of another structural element (11) so that the respective cavities (14) are in reciprocal communication with each other and together form one or more connection cavities (22) in said base body (21).

11. Method to make a satellite structure (20) as in claim 10, **characterized in that** it provides to make an electric circuit (23) integrated in at least one connection cavity (22) of said base body (21), connecting connector elements (17) and/or electric components provided in said cavities (14) with respect to each other.

12. Method to make a satellite structure (20) as in claim 10 or 11, **characterized in that** it provides to dispose the at least one electric conductor element (16) in one or more of the cavities (14) of respective structural elements (11) before assembling said structural elements (11).

13. Method to make a satellite structure (20) as in claim 10 or 11, **characterized in that** it provides to insert the conductor element (16) through the at least one or more connection cavities (22) defined by respective structural elements (11) after assembling the latter.

14. Method to make a satellite structure (20) as in any of the claims from 10 to 13, **characterized in that** it provides to make available a thermoplastic material, to supply a final shape of said structural elements (11) and to make said final shape using said plastic material by means of the 3D additive technique, sintering, extrusion or molding.

## Patentansprüche

1. Modulare Satellitenstruktur (20), flach oder dreidimensional, aufweisend einen strukturierten Satz, um die modulare Satellitenstruktur herzustellen, wobei der strukturierte Satz eine Mehrzahl von Strukturelementen (11) aufweist, wobei die Strukturelemente (11) jeweilig Streben (211) und Verbindungselemente (111) sind, wobei jedes Strukturelement (11) aufweist einen aus einem Kunststoff-Material hergestellten enthaltenden Körper (13), welcher mit zumindest einer Kavität (14) bereitgestellt ist, welche zwischen zumindest zwei Öffnungen (15) des besagten enthaltenden Körpers (13) definiert ist, und Verbindungsmittel (12), um zwei oder mehr der besagten Strukturelemente (11) bezüglich einander zu verbinden, um zumindest einen Basiskörper (21) mit einer flachen oder dreidimensionalen Polygon-Struktur zu bilden, sodass in einem Zusammengebaut- und Verbunden-Zustand eine Öffnung (15) eines Strukturelements (11) mit einer Öffnung (15) eines anderen Strukturelements (11) zusammenpasst und die jeweiligen Kavitäten (14) in Kommunikation miteinander sind und zusammen eine oder mehr Verbindungskavitäten (22) in dem besagten Basiskörper (21) bilden, wobei jedes Verbindungselement (111) zwei oder mehr Streben (211) verbindet,
**dadurch gekennzeichnet, dass**
zumindest ein Leiterelement (16), welches imstande ist, elektrischen Strom zu leiten, wenn es unter Spannung steht, in den besagten Kavitäten (14) angeordnet ist.

2. Satellitenstruktur wie in Anspruch 1, **dadurch gekennzeichnet, dass** zumindest eine elektrische Komponente in den besagten Kavitäten (14) eines oder mehrerer Strukturelemente (11) angeordnet ist, wobei die besagte elektrische Komponente einen oder mehr von entweder einem Sensor, einer Verarbeitungseinheit, einem Mikroprozessor oder einer elektrischen Leistungsversorgung aufweist.

3. Satellitenstruktur wie in Anspruch 2, **dadurch gekennzeichnet, dass** zumindest ein elektrischer Verbinder (17) mit dem besagten zumindest einen Leiterelement (16) verbunden ist und eingerichtet ist, um mit zumindest einem Leiterelement (16) eines anderen Strukturelements (11) oder mit einer elektrischen Vorrichtung (18) elektrisch verbunden zu sein.

4. Satellitenstruktur wie in irgendeinem der Ansprüche von 2 bis 3, **dadurch gekennzeichnet, dass** der jeweilige enthaltende Körper (13) des Verbindungselements (111) und der Strebe (211) zumindest zwei der besagten Öffnungen (15) ausgerichtet in zwei unterschiedlichen Richtungen hat.

5. Satellitenstruktur wie in irgendeinem der Ansprüche von 1 bis 3, **dadurch gekennzeichnet, dass** der besagte enthaltende Körper (13) der Strebe (211) zumindest zwei Öffnungen (15) aufweist, welche koaxial zueinander sind.

6. Satellitenstruktur wie in irgendeinem der Ansprüche von 1 bis 4, **dadurch gekennzeichnet, dass** der besagte enthaltende Körper (13) der Strebe (211) zumindest zwei Öffnungen (15) aufweist, welche in Richtungen ausgerichtet sind, welche bezüglich einander senkrecht sind.

7. Satellitenstruktur wie in irgendeinem vorherigen Anspruch, **dadurch gekennzeichnet, dass** der enthaltende Körper (13) aus einem oder mehreren thermoplastischen Materialien besteht, die aus einer Gruppe ausgewählt sind, die besteht aus: Polyetheretherketon (PEEK), kohlenstofffaserverstärktem Polyetheretherketon (CFR-PEEK), Flüssigkristallpolymeren (LCP), Polyoxymethylen (POM) und Kombinationen davon.

8. Satellitenstruktur wie in Anspruch 3, **dadurch gekennzeichnet, dass** in zumindest einer der besagten Verbindungskavitäten (22) ein elektrischer Schaltkreis (23) ist, welcher aus einer Mehrzahl der Leiterelemente (16) besteht, welche in den besagten Kavitäten (14) bereitgestellt sind und welche mittels elektrischer Leiter (17), welche in Übereinstimmung mit den jeweiligen Öffnungen (15) der besagten Strukturelemente (11) bereitgestellt sind, miteinander verbunden sind.

9. Satellitenstruktur wie in irgendeinem vorherigen Anspruch, **dadurch gekennzeichnet, dass** sie eine Mehrzahl von Basiskörpern (21) mit einer flachen oder dreidimensionalen Form aufweist, welche miteinander assoziiert sind und eine identische polygonale Form oder zumindest eine identische gegenseitige Verbindungsfläche haben.

10. Verfahren, um eine modulare Satellitenstruktur (20) wie in irgendeinem vorherigen Anspruch herzustellen, wobei das Verfahren vorsieht, den strukturierten Satz verfügbar zu machen, welcher eine Mehrzahl der besagten Strukturelemente (11) aufweist, um die besagten Strukturelemente als Verbindungselement (111) und Strebe (211) bezüglich einander zusammenzubauen, unter Verbinden jedes Verbindungselements (111) mit zwei oder mehr Streben (211), unter Ausbilden von zumindest einem Basiskörper (21) mit einer flachen oder dreidimensionalen polygonalen Struktur, unter Anpassen einer Öffnung (15) des enthaltenden Körpers (13) eines Strukturelements (11) mit einer Öffnung (15) des enthaltenden Körpers (13) eines anderen Strukturelements (11), sodass die jeweiligen Kavitäten (14) in gegenseitiger Kommunikation miteinander sind und zusammen eine oder mehrere Verbindungskavitäten (22) in dem besagten Basiskörper (21) bilden.

11. Verfahren, um eine Satellitenstruktur (20) herzustellen, wie in Anspruch 10, **dadurch gekennzeichnet, dass** es vorsieht, einen elektrischen Schaltkreis (23) herzustellen, welcher in zumindest einer Verbindungskavität (22) des besagten Basiskörpers (21) integriert ist, unter Verbinden von Verbinder-Elementen (17) und/oder elektrischen Komponenten, welche in den besagten Kavitäten (14) bereitgestellt sind, bezüglich einander.

12. Verfahren, um eine Satellitenstruktur (20) herzustellen, wie in Anspruch 10 oder 11, **dadurch gekennzeichnet, dass** es vorsieht, das zumindest eine elektrische Leiterelement (16) in einer oder mehreren der Kavitäten (14) jeweiliger Strukturelemente (11) anzuordnen, vor dem Zusammenbauen der besagten Strukturelemente (11).

13. Verfahren, um eine Satellitenstruktur (20) herzustellen, wie in Anspruch 10 oder 11, **dadurch gekennzeichnet, dass** es vorsieht, das Verbinder-Element (16) durch die zumindest eine oder mehrere Verbindungskavitäten (22) einzuführen, welche mittels jeweiliger Strukturelemente (11) definiert werden, nach dem Zusammenbauen der Letzteren.

14. Verfahren, um eine Satellitenstruktur (20) herzustellen, wie in irgendeinem der Ansprüche von 10 bis 13, **dadurch gekennzeichnet, dass** es vorsieht, ein thermoplastisches Material verfügbar zu machen, um eine finale Form der besagten Strukturelemente (11) bereitzustellen, und um die besagte finale Form unter Verwendung des besagten Kunststoff-Materials mittels 3D-Additivtechnik, Sintern, Extrudieren oder Gießen herzustellen.

## Revendications

1. Structure de satellite modulaire (20), plate ou tridimensionnelle, comprenant un ensemble structuré pour fabriquer la structure de satellite modulaire, dans laquelle l'ensemble structuré comprend une pluralité d'éléments structurels (11), dans laquelle les éléments structurels (11) sont des barres (211) et des raccords (111), respectivement,
dans laquelle chaque élément structurel (11) comprend un corps de confinement (13) réalisé en matière plastique pourvu d'au moins une cavité (14) définie entre au moins deux ouvertures (15) dudit corps de confinement (13), et des moyens de connexion (12) pour connecter mutuellement deux desdits éléments structuraux (11) ou plus afin de former au moins un corps de base (21) avec une structure polygonale plate ou tridimensionnelle, de sorte que dans un état assemblé et connecté, une ouverture (15) d'un élément structurel (11) s'ajuste avec une ouverture (15) d'un autre élément structurel (11) et les cavités respectives (14) sont mises en communication mutuellement et forment ensemble une ou plusieurs cavités de connexion (22) dans ledit corps de base (21), dans laquelle chaque raccord (111) connecte deux barres (211) ou plus,
**caractérisée en ce que**
au moins un élément conducteur (16) capable de conduire un courant électrique lorsqu' il est alimenté est disposé dans lesdites cavités (14).

2. Structure de satellite selon la revendication 1, **caractérisée en ce qu'**au moins un composant électrique est disposé dans lesdites cavités (14) d'un ou plusieurs éléments structurels (11), dans laquelle ledit composant électrique comprend un ou plusieurs parmi un capteur, une unité de traitement, un microprocesseur ou une alimentation électrique.

3. Structure de satellite selon la revendication 2, **caractérisée en ce qu'**au moins un connecteur électrique (17) est connecté audit au moins un élément conducteur (16), et configuré pour se connecter électriquement à au moins un élément conducteur (16) d'un autre élément structurel (11), ou à un dispositif électrique (18).

4. Structure de satellite selon l'une quelconque des revendications 2 à 3, **caractérisée en ce que** le corps de confinement respectif (13) du raccord (111) et de la barre (211) a au moins deux desdites ouvertures (15) orientées dans deux directions séparées.

5. Structure de satellite selon l'une quelconque des revendications 1 à 3, **caractérisée en ce que** ledit corps de réception (13) de la barre (211) comprend au moins deux ouvertures (15) mutuellement coaxiales.

6. Structure de satellite selon l'une quelconque des revendications 1 à 4, **caractérisée en ce que** ledit corps de confinement (13) de la barre (211) comprend au moins deux ouvertures (15) orientées dans des directions mutuellement orthogonales.

7. Structure de satellite selon l'une quelconque des revendications précédentes, **caractérisée en ce que** ledit corps de confinement (13) consiste en une ou plusieurs matières thermoplastiques choisies dans un groupe consistant en : polyéther-éther-cétone (PEEK), polyéther-éther-cétone renforcée par des fibres de carbone (CFR-PEEK), polymères à cristaux liquides (LCP), polyoxyméthylène (POM) et des combinaisons de ceux-ci.

8. Structure de satellite selon la revendication 3, **caractérisée en ce que** dans au moins l'une desdites cavités de connexion (22) se trouve un circuit électrique (23) consistant en une pluralité des éléments conducteurs (16) prévus dans lesdites cavités (14) et connectés mutuellement au moyen de connecteurs électriques (17) prévus en correspondance avec les ouvertures respectives (15) desdits éléments structurels (11).

9. Structure de satellite selon l'une quelconque des revendications précédentes, **caractérisée en ce qu'**elle comprend une pluralité de corps de base (21) ayant une forme plate ou tridimensionnelle, associés mutuellement et ayant une forme polygonale identique, ou au moins une face de connexion réciproque identique.

10. Procédé de fabrication d'une structure de satellite modulaire (20) selon l'une quelconque des revendications précédentes, dans lequel le procédé prévoit de rendre disponible l'ensemble structuré comprenant une pluralité desdits éléments structurels (11), d'assembler lesdits éléments structurels sous la forme d'un raccord (111) et d'une barre (211) l'un par rapport à l'autre, de connecter chaque raccord (211) avec deux barres (211) ou plus en formant au moins un corps de base (21) avec une structure polygonale plate ou tridimensionnelle, de faire en sorte qu'une ouverture (15) du corps de confinement (13) d'un élément structurel (11) s'ajuste avec une ouverture (15) du corps de confinement (13) d'un autre élément structurel (11) de telle sorte que les cavités respectives (14) soient mutuellement en communication réciproque et forment ensemble une ou plusieurs cavités de connexion (22) dans ledit corps de base (21).

11. Procédé de fabrication d'une structure de satellite (20) selon la revendication 10, **caractérisé en ce qu'**il prévoit de fabriquer un circuit électrique (23) intégré dans au moins une cavité de connexion (22) dudit corps de base (21) connectant mutuellement des éléments connecteurs (17) et/ou des composants électriques prévus dans lesdites cavités (14).

12. Procédé de fabrication d'une structure de satellite (20) selon la revendication 10 ou 11, **caractérisé en ce qu'**il prévoit de disposer le au moins un élément conducteur électrique (16) dans une ou plusieurs des cavités (14) d'éléments structurels respectifs (11) avant d'assembler lesdits éléments structurels (11).

13. Procédé de fabrication d'une structure de satellite (20) selon la revendication 10 ou 11, **caractérisé en ce qu'**il prévoit d'insérer l'élément conducteur (16) à travers les au moins une ou plusieurs cavités de connexion (22) définies par des éléments structurels respectifs (11) après assemblage de ces derniers.

14. Procédé de fabrication d'une structure de satellite (20) selon l'une quelconque des revendications 10 à 13, **caractérisée en ce qu'**il prévoit de rendre disponible un matériau thermoplastique, de fournir une forme finale desdits éléments structurels (11) et de fabriquer ladite forme finale en utilisant ledit matériau plastique au moyen de la technique additive 3D, d'un frittage, d'une extrusion ou d'un moulage.
